# NEUE EUROPÄISCHE PATENTSCHRIFT

(11) **EP 2 718 586 B2**
(45) Veröffentlichungstag und Bekanntmachung des Hinweises auf die Entscheidung über den Einspruch: **03.07.2024**
(45) Hinweis auf die Patenterteilung: 20.03.2019
(21) Anmeldenummer: 12720174.7
(22) Anmeldetag: 09.05.2012
(51) Int. Cl.: F16F 15/123, F16F 15/14

(54) **ANTRIEBSSYSTEM FÜR EIN FAHRZEUG**
DRIVE SYSTEM FOR A VEHICLE
SYSTÈME DE PROPULSION POUR VÉHICULE

(30) Priorität: 07.06.2011 DE 102011077121; 10.04.2012 DE 102012205793
(43) Veröffentlichungstag der Anmeldung: 16.04.2014
(73) Patentinhaber: ZF Friedrichshafen AG, 88046 Friedrichshafen (DE)
(72) Erfinder: ORLAMÜNDER, Andreas, 97453 Schonungen (DE); LORENZ, Daniel, 97688 Bad Kissingen (DE); KÜHNER, Michael, 74078 Heilbronn (DE); DÖGEL, Thomas, 97720 Nüdlingen (DE)
(86) Internationale Anmeldenummer: PCT/EP2012/058561
(87) Internationale Veröffentlichungsnummer: WO 2012/168026

(56) Entgegenhaltungen:
- EP-A1- 2 788 604
- DD-A1- 40 068
- DE-A1- 10 005 544
- DE-A1- 10 018 955
- DE-A1- 19 831 156
- DE-A1- 19 911 562
- DE-A1-102006 008 541
- DE-A1-102006 014 952
- DE-A1-102008 025 376
- DE-A1-102008 057 647
- DE-A1-102009 042 812
- DE-A1-102009 052 055
- DE-A1-102010 046 669
- DE-A1-102011 087 730
- DE-A1-102012 203 330
- GB-A- 2 413 614
- US-A- 5 425 335
- US-A1- 2005 182 553
- US-A1- 2005 205 060
- US-B1- 6 408 717
- W.T. THOMSON: "Systems with two degrees of freedom" In: "Mechanical Vibrations 2nd edition", 1958, Englewood Cliffs, NJ, USA pages 132-135,

## Beschreibung

Die vorliegende Erfindung betrifft ein Antriebssystem für ein Fahrzeug umfassend eine Brennkraftmaschine und eine Drehschwingungsdämpfungsanordnung, wobei die Brennkraftmaschine zwischen Betriebsarten unterschiedlicher Leistungsfähigkeit umschaltbar ist.

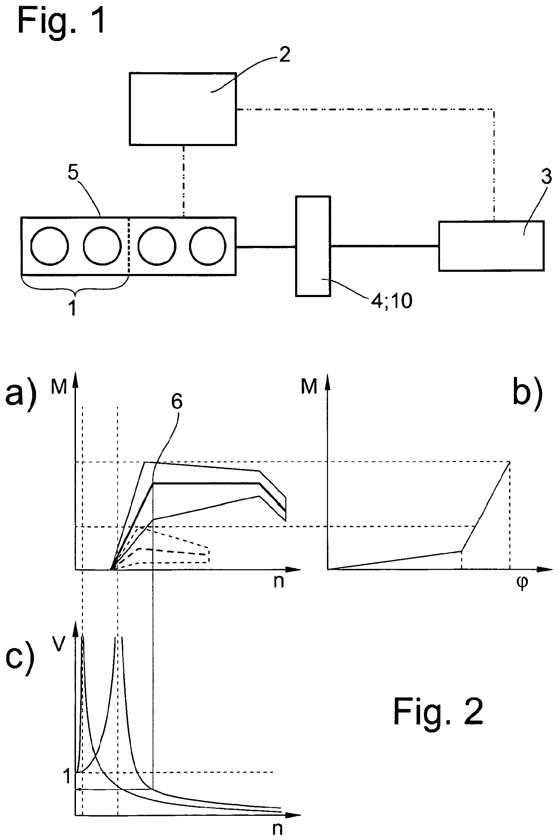

Ein in Fig. 1 prinzipartig dargestelltes Antriebssystem umfasst einen Verbrennungsmotor 5, der aufgrund des periodischen Verbrennungsprozesses ein ungleichförmiges Drehmoment abgibt. Dadurch ist dem Nennmoment ein Störmoment mit festen Ordnungen überlagert. Diese Ordnungen hängen vom Verbrennungsprozess (2- oder 4-Taktverfahren) und von der Zylinderanzahl ab. So ist die hauptanregende Ordnung eines 4-Zylinder-4-Takt-Motors die zweite Ordnung, die eines 3-Zylinder-4-Takt-Motors die 1,5te, die eines 4-Zylinder-2-Takt-Motors die zweite Ordnung.

Das System weist ein Steuergerät 2 auf, das anhand von Signalen, wie Beispielsweise der Fahrgeschwindigkeit, aus dem Motor oder dem Restantriebsstrang 3 (Getriebe, Differential, Achse) erkennt, welcher Last- und Drehzahlzustand am Motor herrscht, und daraufhin wählt, ob alle oder nur ein Teil der Zylinder betrieben werden soll bzw. welches Brennverfahren im Motor verwendet werden soll, allgemein also eine Auswahl trifft zwischen Betriebsarten unterschiedlicher Leistungsfähigkeit.

Um einen Antriebsstrang zu beruhigen, werden Schwingungsreduzierungssysteme 4, als Drehschwingungsdämpfungsanordnungen, eingesetzt, die z.B. bezogen auf die Anregungsordnung ausgelegt werden. Dabei konnte man bislang von im Betrieb unveränderlichen festen Ordnungen ausgehen.

Aus dem Grund der Verbrauchs- und damit auch Emissionsreduzierung bietet es sich an, im Betrieb die Anzahl der Zylinder oder das Brennverfahren, also die Betriebsart, zu verändern. Ein Verbrennungsmotor hat seinen optimalen Wirkungsgrad immer bei verhältnismäßig hoher Last, so dass hier der spezifische Kraftstoffverbrauch am geringsten ist. Die im realen Betrieb häufigen Teillastzustände verbrauchen bezogen auf die abgerufene Leistung zu viel Kraftstoff.

Eine Lösung dieses Problems besteht darin, einzelne Zylinder 1 abzuschalten und die verbleibenden Zylinder auf einem höheren Last- und damit Wirkungsgradniveau zu betreiben. Diese Abschaltung kann beispielsweise dadurch erfolgen, dass die Kraftstoffeinspritzung bei der Hälfte der Zylinder ausgesetzt wird und/oder die Steuerzeiten über eine variable Ventilsteuerung verändert werden.

Die alternative Lösung zu einer Zylinderabschaltung besteht darin, einen Viertakt-Motor für den Teillastbetrieb optimal auszulegen und bei Bedarf an Spitzenlast in den Zweitakt-Betrieb umzuschalten.

Insbesondere im verbrauchsrelevanten Zyklus werden bezogen auf den Vollmotor nur sehr kleine Lasten abgerufen; so gibt der Motor im NEFZ (Neuer Europäischer Fahrzyklus) nur ca. 10 kW bei einer installierten Leistung von bis zu 200 kW ab, da die geforderten Beschleunigungen sehr moderat sind. Auch im Alltagsbetrieb eines Fahrzeuges wird nur in seltenen Fällen die volle Last abgerufen, so dass eine Zylinderabschaltung oder eine Arbeitsverfahrenumschaltung großes Einsparpotential bieten.

Wenn sich die Anregungsordnung ändert, dann ändert sich auch bezogen auf die Drehzahl oder Frequenz der Abstand des Betriebsbereiches von der Eigenfrequenz des Schwingungsreduzierungssystems und damit die Güte der Schwingungsreduzierung.

Die DE 100 18 955 A1 bezieht sich auf ein Schwingungsdämpfersystem, während die US 6,408,717 B1 ein Zweimassenschwungrad, die DE 10 2006 008 541 A1 ein Zweimassendämpfungsschwungrad, die DE 10 2009 042 812 A1 eine Torsionsdämpfungseinrichtung und die US 2005/0205060 A1 eine Zylinder- und Ventilsteuerung für eine Maschine beschreibt, deren Ventile deaktiviert werden können. US 5,425,335 A und US 2005/182553 A1 offenbaren Brennkraftmaschinen, die zwischen verschiedenen Betriebsarten umschaltbar sind.

Es ist die Aufgabe der vorliegenden Erfindung ein Antriebssystem so auszulegen, dass bei sich im Betrieb änderndem Anregungsverhalten eine stets gute Schwingungsreduzierungsgüte gewährleistet ist.

Erfindungsgemäß wird diese Aufgabe durch ein Antriebssystem gemäß Anspruch 1 gelöst.

Weitere vorteilhafte Ausgestaltungsvarianten sind Gegenstand der Unteransprüche.

Die Erfindung wird nachfolgend mit Bezug auf die beiliegenden Figuren detailliert beschrieben. Es zeigt:
- Fig. 1: in prinzipartiger Darstellung ein Antriebssystem;
- Fig. 2a): aufgetragen über der Drehzahl, das von dem Verbrennungsmotor in einer Betriebsart mit maximaler Leistungsfähigkeit und einer Beriebsart mit verringerter Leistungsfähigkeit abgebbare Drehmoment;
- Fig. 2b): eine Winkel-Drehmoment-Kennlinie einer Drehschwingungsdämpfungsanordnung mit ungünstiger Kennlinienauslegung;
- Fig. 2c): aufgetragen über der Drehzahl, die Übertragungsfunktion der Drehschwingungsdämpfungsanordnung mit den Resonanzstellen zweier Dämpferstufen;
- Fig. 3a): eine der Fig. 2a) entsprechende Darstellung;
- Fig. 3b): eine der Fig. 2b) entsprechende Darstellung einer Kennlinie einer Drehschwingungsdämpferanordnung mit günstiger Kennlinienauslegung;
- Fig. 3c): eine der Fig. 2c) entsprechende Darstellung der Übertragungsfunktionen für den Fall einer günstigen Kennlinienauslegung;
- Fig. 4: aufgetragen über der Drehzahl, die Übertragungsfunktion eines drehzahladaptiven Tilgers;
- Fig. 5: in Teillängsschnittansicht einer Drehschwingungsdämpfungsanordnung mit einem Drehschwingungsdämpfer und einem drehzahladaptiven Tilger;
- Fig. 6: die Drehschwingungsdämpfungsanordnung der Fig. 5 in Axialansicht und geöffnetem Zustand;
- Fig. 7: eine Teil-Axialansicht eines drehzahladaptiven Tilgers anderer Bauart;
- Fig. 8: eine prinzipartige Teil-Axialansicht eines drehzahladaptiven Tilgers, basierend auf dem Aufbauprinzip der Fig. 7;
- Fig. 9: eine Längsschnittdarstellung eines drehzahladpativen Tilgers, basierend auf dem Aufbauprinzip der Fig. 7;
- Fig. 10: den drehzahladaptiven Tilger der Fig. 9 in Teil-Axialansicht;
- Fig. 11: eine der Fig. 4 entsprechenden Darstellung einer Übertragungsfunktion eines drehzahladaptiven Tilgers für unterschiedliche Auslegungen;
- Fig. 12: eine Teil-Axialansicht eines Festfrequenztilgers in prinzipieller Darstellung.

Ein Tiefpassfilter lässt das Moment mit niedriger Frequenz/Ordnung durch (z. B. ideal nur das Nennmoment mit 0-ter Ordnung) und sperrt die Wechselmomente höherer Ordnung bzw. Frequenz. Dies wird realisiert durch ein schwingungsfähiges Zweimassensystem (ZMS) mit einer Primärseite und einer gegen die Wirkung einer Dämpferelementenanordnung, z.B. Federanordnung, bezüglich der Primärseite drehbaren Sekundärseite, das eine Eigenfrequenz besitzt, bei der, wenn diese angeregt wird, das System sehr hohe Winkelausschläge macht. Das bedeutet im besten Fall störende Geräusche und im schlimmsten Fall seine Zerstörung. Daher sind die Systeme bezüglich ihrer Massen-Steifigkeits-Verhältnisse so ausgelegt, dass diese Eigenfrequenz weit unterhalb der Leerlaufdrehzahl und damit des Betriebsdrehzahlbereiches liegt. Beispielsweise liegt die Eigenfrequenz eines Zweimassenschwungrades bei ca. 750/min.

Wird dieses Zweimassenschwunggrad mit einem 4-Zylinder-4-Takt-Motor betrieben, so ist die niedrigste Anregungsfrequenz bei einer Leerlaufdrehzahl von 750/min durch die 2. Ordnung als Hauptanregende bei ca. 1600/min also weit oberhalb der Resonanz des Zweimassenschwungrades. Hierbei nutzt der Umstand, dass weit oberhalb der Resonanz aufgrund der Übertragungsfunktion die Amplituden hinter dem System kleiner sind als vor dem System. Das Zweimassenschwungrad entkoppelt und reduziert die Anregung, die an den Restantriebsstrang, wie z.B. das Getriebe, weitergegeben wird und zu Geräusch führen kann.

Wird bei diesem Motor nun die Anzahl der Zylinder halbiert, halbiert sich auch die Ordnung der Hauptanregenden von der 2. auf die 1. Ordnung. Dadurch liegt die niedrigste Anregungsfrequenz bei einer Leerlaufdrehzahl von 750/min bei 800/min und damit im Bereich der Resonanzfrequenz des Zweimassenschwungrades. Die Amplituden werden sehr groß und das System entkoppelt nicht.

Die Lösung der Anhebung der Leerlaufdrehzahl im Abschaltbetrieb ist zwar maschinendynamisch sinnvoll, hat aber den Nachteil, dass die geschwindigkeitsproportionalen hydrodynamischen Verluste zunehmen und der Motor nicht mehr im Bereich des optimalen Wirkungsgrades betrieben wird.

Aus diesem Grund muss das Schwingungsreduzierungssystem speziell abgestimmt werden.

In Fig. 2 ist dargestellt, wie sich eine übliche Auslegung einer Drehschwingungsdämpfungsanordnung, wie z.B. Zweimassenschwunggrad, auf das Verhalten bei Zylinderabschaltung auswirkt. In Fig. 2b) ist eine progressive Drehmoment-Winkel-Kennlinie dargestellt, die eine Knickstelle hat, bei der die Steifigkeit stark zunimmt. Die erste Stufe ist beispielsweise eine Leerlauf- oder Niedriglaststufe. In den beiden Kennlinienabschnitten unter und über der Knickstelle hat die Kennlinie jeweils einen im Wesentlichen linearen Verlauf.

In Fig. 2a) ist mit der durchgezogenen dicken Linie das Nennmoment eines 4-Zylinder-Motors über der Drehzahl dargestellt. Die einhüllenden durchgezogenen dünnen Linien stellen die Amplituden des überlagerten Wechselmoments dar und repräsentieren somit das maximale bzw. minimale Drehmoment. Im Vergleich mit der Zweimassenschwungradkennlinie sieht man, dass bei Volllast die zweite Stufe des Zweimassenschwungrades wirkt. Die durchgezogene dicke Linie stellt das Nennmoment ohne Zylinderabschaltung, also in einer Betriebsart mit höherer bzw. maximaler Leistungsfähigkeit, dar.

Die dicke gestrichelte Linie in Fig. 2a) stellt den Nennmomentenverlauf des zylinderabgeschalteten Motors dar, bei dem nur noch 2 Zylinder arbeiten. Dementsprechend steht auch nur noch näherungsweise das halbe Moment zur Verfügung. Diesem Nennmoment wird ebenfalls ein Störmoment überlagert, dessen Amplitude die gestrichelte dünne Einhüllende darstellt. Üblicherweise wird der Abschaltbetrieb nicht über das gesamte Drehzahlband des Motors angewendet.

Bedingt durch die Auslegung der Kennlinie reicht die weiche erste Stufe aber für das Nennmoment im Zylinderabschaltbetrieb nicht aus, so dass das Zweimassenschwungrad in seiner zweiten Stufe betrieben wird.

Die Entkopplungsgüte hängt in beiden Fällen -Vollzylinderbetrieb und Abschaltbetrieb- vom drehzahlbezogenen Abstand von der Resonanz des Zweimassenschwungrades ab.

Im Vollzylinderbetrieb wird das Zweimassenschwungrad nach wie vor aufgrund der Hauptanregungsordnung (2. Ordnung) überkritisch betrieben. In der in Fig. 2c) dargestellten Übertragungsfunktion ist sichtbar, dass das Amplitudenverhältnis < 1 ist, wenn man beispielsweise die Drehzahl an der Stelle 6 betrachtet, indem man das Lot bei der Drehzahl fällt, bis man auf die Übertragungsfunktion der zweiten Stufe trifft.

Wird bei dem Motor eine Zylinderabschaltung vorgenommen, so reduziert sich die hauptanregende Ordnung beispielsweise auf die Hälfte. Anstelle der 2. Ordnung wird die 1. Ordnung relevant. Deshalb muss in Fig. 2c) eine Ordnungsanpassung vorgenommen werden; man trifft so bei halbierter Drehzahl auf die Übertragungsfunktion der zweiten Stufe des Zweimassenschwungrades in der Nähe der Resonanz - hier sogar unterkritisch - bei einem wesentlich größerem Amplitudenverhältnis, was sich trotz der niedrigeren Momentenamplitude im Zylinderabschaltbetrieb in einer inakzeptabel schlechten Entkopplungsgüte auswirkt.

Grund für das schlechte Verhalten ist die sehr flache erste Stufe, so dass im Zylinderabschaltbetrieb auch in der zu steifen zweiten Stufe gefahren wird.

Eine Lösung besteht darin, dass die erste Stufe der Kennlinie so steif ausgeführt wird, dass einerseits der Zylinderabschaltbetrieb immer in der ersten Stufe stattfindet und andererseits die Steifigkeit noch so gering ist, dass überkritischer Betrieb möglich ist.

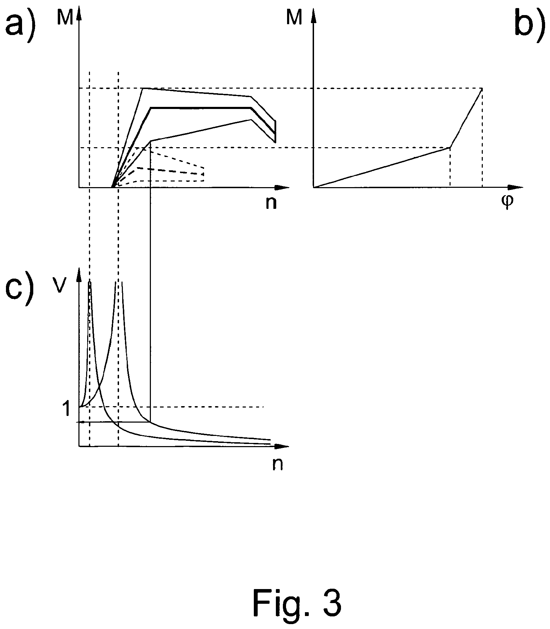

In Fig. 3b) ist deutlich zu sehen, dass die Steifigkeit der zweiten Stufe, die ja beim Vollzylindermotor in der Volllast eine gute Entkopplung gewährleistet, beibehalten wurde, während die erste Stufe steifer als in Fig. 2 abgestimmt wurde, so dass der Abschaltbetrieb immer in dieser ersten Stufe erfolgen kann.

Dadurch wird selbst nach der Ordnungsanpassung für den Abschaltbetrieb ein Übertragungsverhältnis von <1 und damit eine Schwingungsentkopplung erreicht.

Eine Auslenkungsmassenpendeleinheit, allgemein Tilger, besteht aus einer Masse als dynamischen und einer Steifigkeit als statischen Energiespeicher. Seine Eigenfrequenz ist so abgestimmt, dass bei ihrer Anregung das Bauteil, an das der Tilger angebunden ist, keine Auslenkung erfährt.

Die Steifigkeit kann konstant sein, so dass sich ein Festfrequenztilger ergibt, oder drehzahlabhängig sein, wodurch sich ein Ordnungstilger, auch drehzahladaptiver Tilger genannt, ergibt. Ein Festfrequenztilger tilgt nur eine feste Frequenz, während der Ordnungstilger eine Ordnung tilgt.

Besonders verbreitet im KFZ sind die Ordnungstilger in Form des Fliehkraftpendels, die zur Tilgung der hauptanregenden Ordnung ausgelegt sind. Da, wie oben beschrieben, sich die hauptanregende Ordnung bei Zylinderabschaltung oder Brennverfahrenumschaltung, allgemein Änderung der Betriebsart, ändert, kann ein einzelner Tilger den Antriebsstrang nicht mehr beruhigen. Es entsteht sogar die Gefahr, dass bei Anlegen einer "falschen" Anregungsordnung der Tilger aufgrund seiner beiden Eigenfrequenzen zu Resonanzen anfacht.

Eine Lösung besteht darin, für jede der möglichen Ordnungen speziell abgestimmte Tilger zu verbauen.

Dabei sind einzelne Tilger für alle auftretenden bzw. kritischen Ordnungen einzusetzen. Im Falle des 4-Zylinder-Motors, der zu einem 2-Zylinder-Motor reduziert wird, benötigt man Tilger mit einer Abstimmung auf die 2. und die 1. Ordnung.

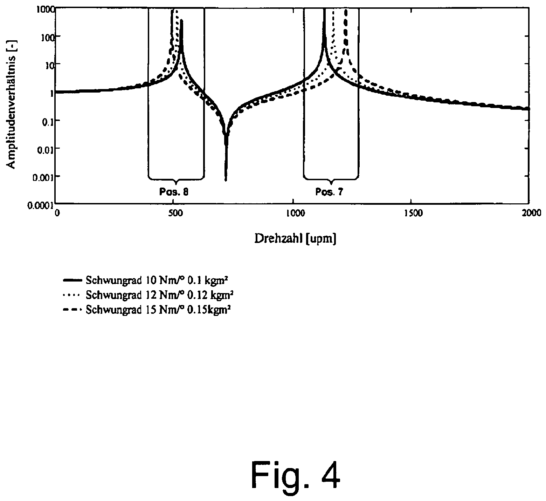

Wie in Fig. 4 dargestellt ist, besitzt ein Tilger neben seiner Tilgungsfrequenz zwei Eigenfrequenzen, bei denen seine Amplitude sehr groß werden kann. Der Abstand dieser Eigenfrequenzen von der Tilgungsfrequenz bezogen auf die Drehzahl hängt von der Masse bzw. dem Massenträgheitsverhältnis ab. Je größer die Trägheit des Tilgers, desto größer ist auch der Abstand. Dabei muss natürlich berücksichtigt werden, dass zur Beibehaltung der Tilgungsfrequenz/-ordnung die Steifigkeit an die Masse/das Massenträgheitsmoment angepasst werden muss. Das Verhältnis aus Steifigkeit und Masse muss gleich bleiben.

Dasselbe Verhalten zeigt ein Ordnungstilger, wie z.B. ein Fliehkraftpendel (Drehzahladaptiver Tilger), wenn man statt der Frequenz die Ordnung auf der Abszisse aufträgt.

Bezogen auf die Zylinderabschaltung bedeutet das, dass bei Halbierung der Anregungsordnung genau eine der unteren Resonanzen bzw. Resonanzordnungen des Tilgers getroffen werden kann, was zur Zerstörung des Tilgers oder zu einer Schwingungsanregung durch den Tilger führen kann.

Die Lösung besteht darin, dass die Trägheit der Tilgermasse entweder kleiner als beispielsweise 90%, vorzugsweise 75%, am meisten bevorzugt 50%, des Schwungrades, allgemein eine Schwungmassenanordnung, ist, um bei Ordnungsreduzierung deutlich unterhalb der unteren Tilgerresonanz zu bleiben, oder deutlich größer als 110%, vorzugsweise 150%, am meisten bevorzugt 200%, um im Umschaltbetrieb noch oberhalb der Tilgerresonanz zu arbeiten.

Der Wert "200%" wird sich aus Bauraum- und Gewichtsgründen oft nur schwer einstellen lassen, während der Wert "50%" seine Grenze im Energiespeichervermögen des Tilgers findet; insbesondere ein drehzahladaptiver Tilger benötigt eine hinreichend große Masse, da er seine Steifigkeit aus der Fliehkraft bezieht.

Das in Fig. 4 gezeigte Verhalten gilt für jeden Tilger, der mit seiner speziellen Tilgungsfrequenz bzw. -ordnung im Schwingungsreduzierungssystem eingesetzt wird.

Darüber hinaus gilt die geschilderte Problematik auch für den umgekehrten Fall. Wenn beispielsweise ein Tilger auf die 2. Ordnung und einer auf die 1. Ordnung abgestimmt bei einem 4-Zylindermotor eingesetzt werden, so besteht für den Tilger der 1. Ordnung, der für den Abschaltbetrieb (2-Zylinderbetrieb) wirken soll, die Gefahr, dass seine obere Resonanzfrequenz bzw. -ordnung im 4-Zylinderbetrieb genau von der Hauptanregenden getroffen wird. Also muss auch hier durch eine geeignete Masse bzw. Massenträgheitsmoment (z.B. <50% oder>> 200%) ein hinreichend großer Frequenz- bzw. Ordnungsabstand sichergestellt sein. Es muss also bei den Auslegungen der Ordnungen bzw. Frequenzen für die Tilger für den Vollzylinder- und den Abschaltbetrieb sichergestellt sein, dass die Frequenz-/Ordnungsbereiche bei 7 und bei 8 aller Tilger nicht getroffen werden.

Insbesondere beim Tilger bietet es sich an, eine gute Vorentkopplung durch einen Tiefpassfilter, also z.B. Zweimassenschwunggrad, vorzuschalten, um mit dem Tilger nur noch das verbleibende Restwechselmoment, das eine sehr kleine Amplitude hat, zu kompensieren. Damit sind auch Tilger mit kleiner Masse und damit kleiner Energieaufnahmemöglichkeit in der Lage, in beiden Betriebszuständen einen hinreichenden Komfort zu gewährleisten.

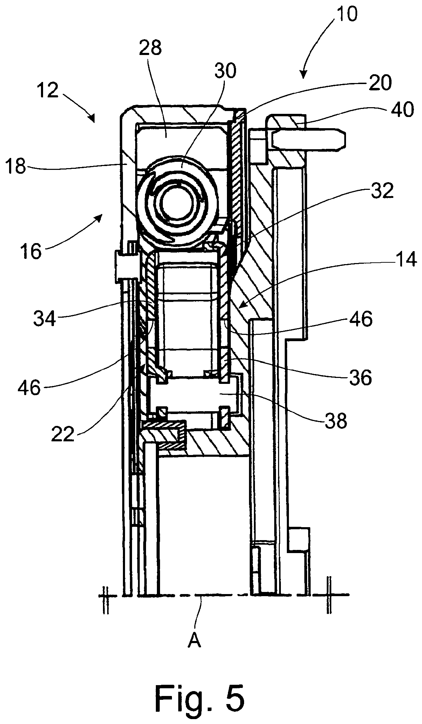

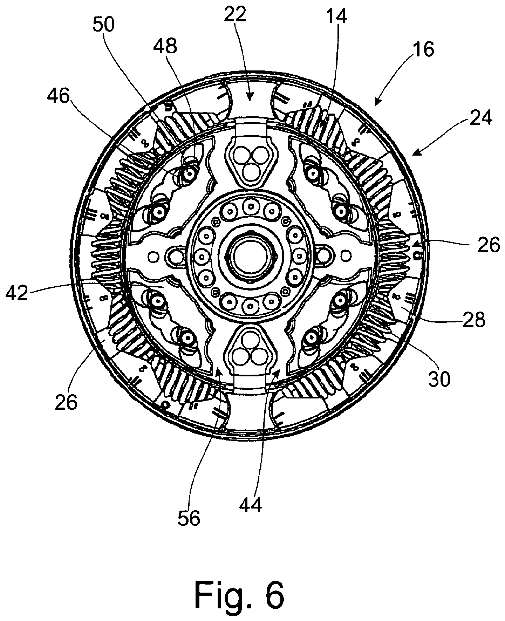

Die Fig. 5 und 6 zeigen ein Ausgestaltungsbeispiel einer allgemein mit 10 bezeichneten Drehschwingungsdämpfungsanordnung, bei welcher ein nach Art eines Zweimassenschwunggrads aufgebauter Drehschwingungsdämpfer 12 mit einem drehzahladaptiven Tilger 14 kombiniert ist. Der Drehschwingungsdämpfer 12 umfasst eine Primärseite 16 mit zwei Deckscheibenelementen 18, 20 sowie eine allgemein mit 22 bezeichnete Sekundärseite, an welcher auch der drehzahladaptive Tilger 14 vorgesehen ist. Die Primärseite 16 und die Sekundärseite 22 stellen jeweilige Umfangsabstützbereiche bereit für eine Dämpferelementenanordnung 24, die im dargestellten Ausgestaltungsbeispiel zwei Dämpferfedereinheiten 26, 26' umfasst. Jede Dämpferfedereinheit 26, 26' umfasst eine Mehrzahl von in Umfangsrichtung aufeinander folgenden und über Gleitschuhe bzw. Federteller 28 aneinander bzw. bezüglich der Primärseite 16 und der Sekundärseite 22 abgestützten Dämpferfedern 30. Dabei können in Umfangsrichtung aufeinander folgende Dämpferfedern 30 zueinander unterschiedlich ausgebildet sein, also unterschiedliche Steifigkeiten bereitstellen, so dass ein gestufter Kennlinienverlauf erhalten wird. Auch können Federn 30 ineinander geschachtelt angeordnet sein, um einen weiteren Einfluss auf die Steifigkeit nehmen zu können.

Die Sekundärseite 22 stellt einen hier gehäuseartig ausgebildeten Auslenkungsmassenträger 32 des als Auslenkungsmassenpendelanordnung wirksamen drehzahladpativen Tilgers 14 bereit. Dabei sind beispielsweise schalenartig aufgebaute Gehäuseteile 34, 36 in ihrem radial inneren Bereich durch Nietbolzen 38 miteinander verbunden. Auch ein sekundärseitiges Schwungrad 40 ist mit dem Auslenkungsmassenträger 32 beispielsweise durch Vernietung fest verbunden.

Am Auslenkungsmassenträger 32 sind in dem in Fig. 6 erkennbaren Ausgestaltungsbeispiel insgesamt vier in einem Winkelabstand von 90° zueinander angeordnete Auslenkungsmassen 42 vorgesehen, welche in ihrer Gesamtheit eine Auslenkungsmassenanordnung 44 bereitstellen. Im Auslenkungsmassenträger 32 und den Auslenkungsmassen 42 sind einander jeweils zugeordnet Führungsbahnen 46, 48 vorgesehen, wobei die am Auslenkungsmassenträger 32 vorgesehenen Führungsbahnen 46 einen radial außen liegenden Scheitelbereich aufweisen, während die an den Auslenkungsmassen 42 vorgesehenen Führungsbahnen 48 einen radial innen liegenden Scheitelbereich aufweisen. Die Führungsbahnen 46, 48 sind ausgehend von jeweiligen Scheitelbereichen nach radial innen bzw. radial außen gekrümmt. In Zuordnung zu diesen Führungsbahnen sind bolzen- bzw. walzenartig ausgebildete Kopplungselemente 50 vorgesehen, die entlang der Führungsbahnen 46 im Auslenkungsmassenträger 32 und entlang der Führungsbahnen 48 in den Auslenkungsmassen 42 bewegbar sind. Auf Grund der Krümmung und der Positionierung der Scheitelbereiche positionieren sich, wenn die Drehschwingungsdämpfungsanordnung 10 um eine Drehachse A rotiert, die Kopplungselemente 50 in den jeweiligen Scheitelbereichen, so dass die Auslenkungsmassen 42 grundsätzlich eine Positionierung mit größtmöglichem Radialabstand zur Drehachse A einnehmen.

Treten Drehungleichförmigkeiten bzw. Drehschwingungen auf, so bewegen sich die Kopplungselemente 50 ausgehend von den Scheitelbereichen entlang der Führungsbahnen 46, 48, wodurch die Auslenkungsmassen 42 im Fliehpotential nach radial innen gezwungen werden und somit potentielle Energie aufnehmen. Die Auslenkungsmassen 42 werden somit in Schwingung versetzt, wobei, vorgegeben durch die Krümmung der Führungsbahnen und die Massen bzw. Massenträgheitsmomente der Auslenkungsmassen 42, der drehzahladaptive Tilger 14 grundsätzlich eine Eigenfrequenz aufweist, welche mit ändernder Drehzahl und damit sich ändernder Fliehkraft variiert. Dies bedeutet, dass durch die Wechselwirkung der Kopplungselemente 50 mit den gekrümmten Führungsbahnen 46, 48 eine fiktive Steifigkeit in der Ankopplung der Auslenkungsmassen 42 bereitgestellt wird, welche sich drehzahlabhängig ändert. Dabei ist es möglich, eine Auslegung bzw. Abstimmung auf eine vorbestimmte Ordnung zu finden, so dass zusammen mit der sich drehzahlabhängig verschiebenden Ordnung auch die Eigenfrequenz des mit der Gesamtheit der Auslenkungsmassen bzw. durch die Auslenkungsmassenanordnung 44 bereitgestellten Schwingungssystems verändert. Dabei bildet der Auslenkungsmassenträger 32 zusammen mit den daran aus einer Grund-Relativlage auslenkbaren Auslenkungsmassen 42 bzw. der Auslenkungsmassenanordnung 44 eine allgemein mit 56 bezeichnete Auslenkungsmassenpendeleinheit. Bei der diese Auslenkungsmassenpendeleinheit 56, also im Wesentlichen dem drehzahladaptiven Tilger 14, und den nach Art eines Zweimassenschwunggrades wirksamen Drehschwingungsdämpfer 12 umfassenden Drehschwingungsdämpfungsanordnung stellt die Primärseite 16 des Drehschwingungsdämpfers 12 im Wesentlichen eine Schwungmassenanordnung bereit, welche über die durch die Dämpferelementenanordnung 24 bzw. die Dämpferfedereinheiten 26 derselben bereitgestellte Steifigkeit an die Auslenkungsmassenpendeleinheit 56 angekoppelt ist.

Um berücksichtigen zu können, dass beim Umschalten des Verbrennungsmotors 5 zwischen verschiedenen Betriebsarten, also beispielsweise beim Übergang von einem Betrieb mit vier Zylindern zu einem Betrieb mit zwei Zylindern, auch die kritischen Anregungsordnungen sich verändern, kann beispielsweise vorgesehen sein, dass in einem Antriebssystem in Zuordnung zu mehreren kritischen Ordnungen, die in verschiedenen Betriebsarten auftreten können bzw. kritisch werden können, jeweils speziell abgestimmte Tilger vorhanden sind. Auch könnten bei ein- und demselben Tilger beispielsweise die Auslenkungsmassen 42 unterschiedlich gestaltet sein oder/und die Führungsbahnen 46, 48 unterschiedlich gestaltet sein, so dass in ein- und demselben Tilger eine Abstimmung auf verschiedene Anregungsordnungen vorgesehen sein kann, wobei die einer jeweiligen Anregungsordnung zugeordneten Auslenkungsmassen dann für sich jeweils eine speziell abgestimmte Auslenkungsmassenanordnung bereitstellen.

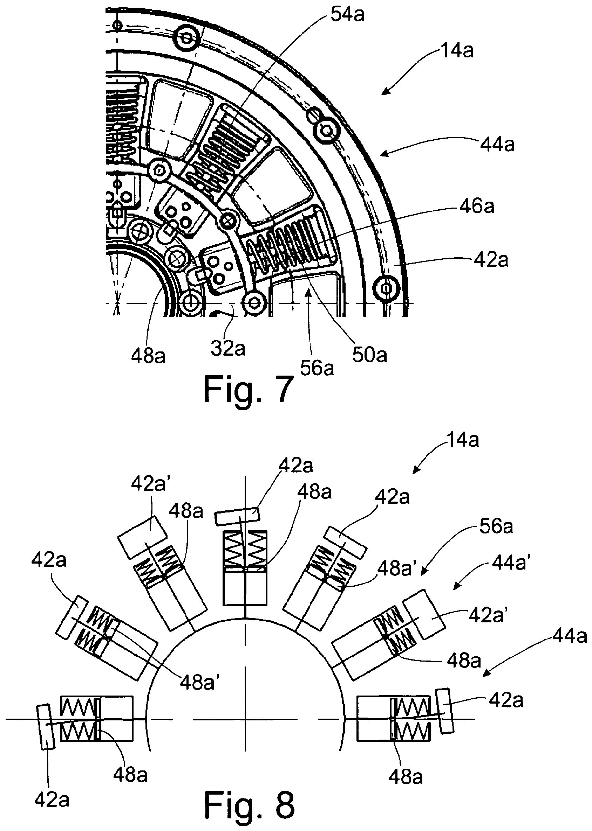

Ein anderes Ausgestaltungsprinzip eines drehzahladaptiven Tilgers ist in Fig. 7 dargestellt. Dieser auch als Auslenkungsmassenpendeleinheit 56a wirksame Tilger 14a weist einen beispielsweise wieder sekundärseitig an einem Drehschwingungsdämpfer, wie z.B. Zweimassenschwunggrad, vorgesehenen Auslenkungsmassenträger 32a auf. An diesem Auslenkungsmassenträger 32a sind in radial sich erstreckenden Führungsöffnungen 46a Abstützelemente 48a radial bewegbar geführt und durch am Auslenkungsmassenträger 32a radial außen sich abstützende Vorspannfedern 50a, hier ausgebildet als Schraubendruckfedern, nach radial innen in Richtung zu einer Basislage beaufschlagt. Eine den Auslenkungsmassenträger 32a radial außen umgebende, ringartige Auslenkungsmasse 42a stellt im Wesentlichen eine Auslenkungsmassenanordnung 44a bereit, von welcher in Zuordnung zu dem Abstützelement 48a ein beispielsweise als Blattfeder ausgebildetes Rückstellelement 54a sich nach radial innen durch die jeweilige Vorspannfeder 50a hindurch erstreckt. In ihrem radial äußeren Bereich sind die Rückstellelelemente 50a jeweils in einem Auslenkungsmassenabstützbereich an der Auslenkungsmasse 42a festgelegt. In ihrem radial inneren Bereich sind sie in Umfangsrichtung an den jeweils zugeordneten Abstützelementen 48a jeweils in einem Trägerabstützbereich abgestützt.

Ein Abstützelement 48a bildet zusammen mit der diesem zugeordneten Vorspannfeder 50a und einem jeweiligen Rückstellelement 54a eine Auslenkungsmassenpendeleinheit 56a, wobei in dem in Fig. 7 dargestellten Ausgestaltungsbeispiel allen Auslenkungsmassenpendeleinheiten 56a eine gemeinsame Auslenkungsmasse 42a bzw. Auslenkungsmassenanordnung 44a zugeordnet ist.

Im Rotationsbetrieb führen Drehungleichförmigkeiten dazu, dass die Auslenkungsmassenanordnung 44a eine Umfangsbeschleunigung bezüglich des Auslenkungsmassenträgers 32a erfährt. Dabei stützt sich die Auslenkungsmassenanordnung 44a über die beispielsweise als Blattfedern ausgebildeten Rückstellelemente 54a an den Abstützelementen 48a und über diese am Auslenkungsmassenträger 32a ab, wobei auf Grund der Federeigenschaften der Rückstellelemente 54a die Auslenkungsmassenanordnung 44a grundsätzlich in eine Grund-Relativlage bezüglich des Auslenkungsmassenträgers 32a vorgespannt ist. Es ist somit ein Schwingungssystem aufgebaut, welches, bedingt durch die Massenträgheit bzw. das Massenträgheitsmoment der Auslenkungsmassenanordnung 44a und die durch die Gesamtheit der Rückstellelemente 54a bereitgestellte Steifigkeit, eine Eigenfrequenz aufweist.

Im Rotationsbetrieb unterliegen die Abstützelemente 48a der Fliehkrafteinwirkung, so dass diese grundsätzlich entgegen der Rückstellkraft der Vorspannfedern 50a nach radial außen beaufschlagt werden. Sind die Vorspannfedern 50a beispielsweise bei in der Basislage positionierten Abstützelementen 48a unter Vorspannung gehalten, ist eine bestimmte Mindestdrehzahl erforderlich, um mit der entsprechenden Fliehkraft diese Vorspannwirkung überwinden zu können. Wird diese Mindestdrehzahl überschritten, reicht die Fliehkraft aus, um die Abstützelemente 48a entgegen der Rückstellwirkung der Vorspannfedern 50a nach radial außen zu verlagern. Damit verlagert sich jedoch auch derjenige Bereich, an welchem die Rückstellelemente 54a sich bezüglich des Auslenkungsmassenträgers 32a abstützen können, nach radial außen. Dies wiederum hat zur Folge, dass die freie Länge der Rückstellelemente 54a mit zunehmender Drehzahl abnimmt, wodurch die Steifigkeit und damit auch die Eigenfrequenz des vorangehend angesprochenen Schwingungssystems zunimmt. Eine derartige Verschiebung der Eigenfrequenz kann bis zu einer oberen Grenzdrehzahl andauern, bei welcher beispielsweise auf Grund vollständiger Kompression der Vorspannfedern 50a oder des Wirksamwerdens von Anschlägen eine noch weitergehende Verlagerung der Abstützelemente 48a nach radial außen nicht möglich ist. In demjenigen Drehzahlbereich, in welchem eine fliehkraftabhängige Radialverlagerung der Abstützelemente 48a möglich ist, ist der Tilger 14a tatsächlich als drehzahladaptiver Tilger wirksam, der auf eine Anregungsordnung abgestimmt sein kann. Bei zu geringer oder zu hoher Drehzahl, also im Wesentlichen radial unveränderlich gehaltenen Abstützelementen 48a findet eine Drehzahladaption der Eigenfrequenz nicht statt, so dass in diesen Zuständen das Schwingungssystem als Festfrequenztilger wirksam ist.

Auch mit dem in Fig. 7 dargestellten Aufbau ist grundsätzlich eine Abstimmung auf mehrere Ordnungen möglich, beispielsweise indem mehrere derartige Tilger mit jeweiligen Trägern, Auslenkungsmassenanordnungen bzw. Auslenkungsmassenpendeleinheiten auf verschiedene Anregungsordnungen abgestimmt vorgesehen werden.

In Fig. 8 ist ein Beispiel veranschaulicht, bei welchem innerhalb eines drehzahladaptiven bzw. in einem Drehzahlbereich drehzahladaptiven Tilgers 14a eine Abstimmung auf mehrere Anregungsordnungen erfolgen kann. Man erkennt in Fig. 8 zueinander unterschiedlich gestaltete Auslenkungsmassenpendeleinheiten 56a. Diese unterscheiden sich beispielsweise in der Auslenkungsmasse 42a bzw. 42a', wobei die Auslenkungsmasse 42a' eine größere Masse aufweist, als die Auslenkungsmasse 42a. Auch unterscheiden sich die Auslenkungsmassenpendeleinheiten 56a in der Ausgestaltung der Abstützelemente 48a bzw. 48a', wobei die Abstützelemente 48a' eine größere Masse aufweisen, als die Abstützelemente 48a. Durch die Auswahl der Massenverhältnisse kann ein Einfluss auf die Drehzahl und damit die fliehkraftabhängige Änderung der Radiallage der Abstützelemente und somit die Steifigkeit der Rückstellelemente genommen werden, ebenso wie auf das Massenträgheitsmoment, welches die durch die Gesamtheit der jeweiligen Auslenkungsmassen 42a bzw. 42a' bereitgestellten Auslenkungsmassenanordnungen 44a bzw. 44a' aufweisen. So kann ein Teil der Auslenkungsmassenpendeleinheiten 56a zur Abstimmung auf eine vorbestimmte Ordnung ausgebildet sein, wobei die Auslenkungsmassen dieser Auslenkungsmassenpendeleinheiten 56a in ihrer Gesamtheit dann eine für diese Ordnung zu berücksichtigende Auslenkungsmassenanordnung bereitstellen. Ein anderer Teil der Auslenkungsmassenpendeleinheiten 56a kann für eine andere anregende Ordnung abgestimmt sein.

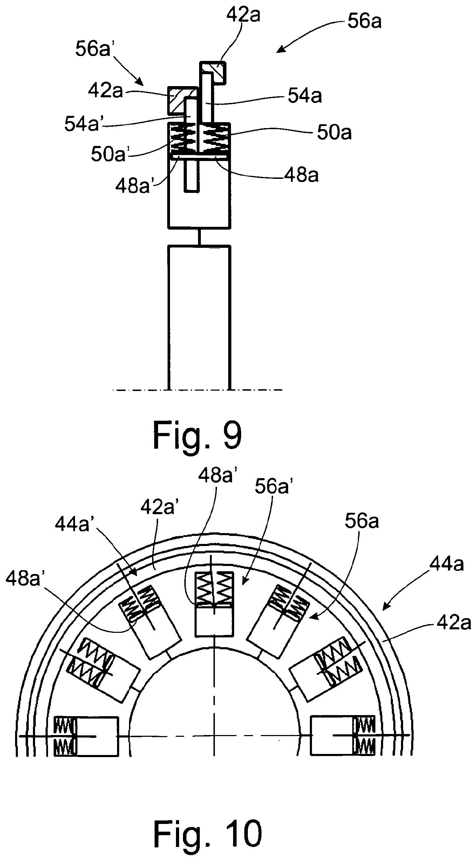

Ein Beispiel für die Abstimmung auf verschiedene anregende Ordnungen ist in den Fig. 9 und 10 gezeigt. Bei diesem Ausgestaltungsbeispiel sind mehrere Auslenkungsmassenpendeleinheiten 56a bzw. 56a' vorgesehen, wobei die Auslenkungsmasseneinheiten 56a eine gemeinsame ringartige Auslenkungsmasse 42a und damit Auslenkungsmassenanordnung 44a aufweisen, während die Auslenungsmassenpendeleinheiten 56a gleichermaßen eine gemeinsame, ringartige Auslenkungsmasse 42a' und damit Auslenkungsmassenanordnung 44a' aufweisen. Beispielsweise durch unterschiedliche Ausgestaltung, also Dimensionierung, der ringartigen Auslenkungsmassen 42a, 42a' durch unterschiedliche Ausgestaltung bzw. Dimensionierung der Abstützelemente 48a bzw. 48a', durch unterschiedliche Ausgestaltung der Rückstellelemente 54a bzw. 54a' sowie durch unterschiedliche Ausgestaltung der Vorspannfedern 50a bzw. 50a' wird es möglich, die beiden Gruppen von Auslenkungsmassenpendeleinheiten 56a bzw. 56a' auf jeweilige Anregungsordnungen abzustimmen.

Bei den vorangehend beschriebenen Ausgestaltungsformen, bei welchen eine Drehschwingungsdämpfungsanordnung 10 eine Auslenkungsmassenpendelanordnung, also beispielsweise drehzahladaptiven Tilger 14, in Verbindung mit einem Drehschwingungungsdämpfer 12 umfasst, kann grundsätzlich die Primärseite 16 bzw. die primärseitige Masse als eine Schwungmassenanordnung betrachtet werden, die über eine Steifigkeit, nämlich die Dämpferelementenanordnung 24 mit der/den Auslenkungsmassenpendeleinheit/en, insbesondere dem Auslenkungsmassenträger 32a, gekoppelt ist. Dieser wiederum ist über eine Steifigkeit, bereitgestellt durch die Kopplungselemente 50 oder die Rückstellelemente 54a, mit der bzw. den Auslenkungsmassenanordnungen 44, 44a gekoppelt.

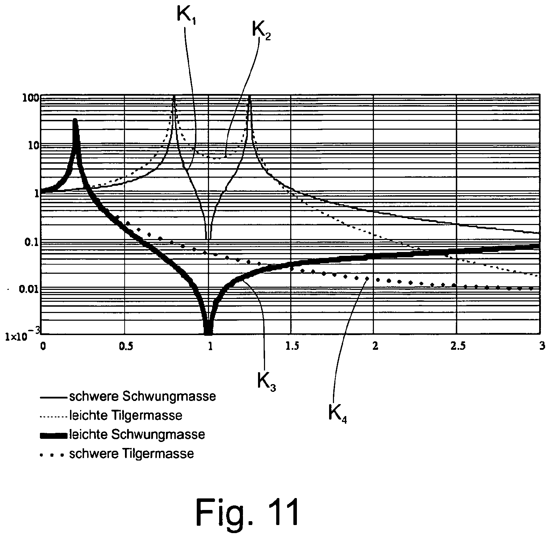

Die Übertragungsfunktion eines derartigen Antriebssystems bzw. der darin enthaltenen Schwingungssysteme ist in einer der Fig. 4 entsprechenden Art und Weise in Fig. 11 noch einmal dargestellt. Dabei stellt die Übertragungsfunktion jeweils das Verhältnis zwischen einer ausgangsseitigen Schwingungsgröße, also beispielsweise Drehbeschleunigung, Drehwinkelgeschwindigkeit oder dergleichen, und einer entsprechenden eingangsseitigen Schwingungsgröße dar. Ein Wert von Null oder nahe bei Null stellt eine ideale Entkopplung dar, bei welcher ausgangsseitig praktisch keine Schwingungen vorhanden sind.

In Fig. 11 repräsentiert die Kurve K₁ die Übertragungsfunktion der Schwungmassenanordnung, als z.B. der Primärseite 16, aufgetragen über dem Verhältnis der Anregungsgröße zur Resonanzstelle des Schwingungssystems. Bei dem Wert 1 liegt die Tilgungsfrequenz der Schwungmassenanordnung vor, bei welcher ausgangsseitig, also nach der durch die Dämpferelementenanordnung 24 bereitgestellten Steifigkeit, im Wesentlichen keine Schwingungen vorhanden sind. Die Kurve K₂ repräsentiert in Zuordnung zur Kurve K₁ die Übertragungsfunktion der jeweils wirksamen Auslenkungsmassenanordnung, welche grundsätzlich allgemein als Tilgermasse bezeichnet werden kann. Man erkennt, dass bei der Resonanzstelle 1 die Kurve K₂ einen von 0 abweichenden Wert aufweist, da letztendlich zum Erreichen der an der Resonanzstelle idealerweise vorhandenen vollständigen Schwingungsauslöschung die Auslenkungsmassen bzw. die Auslenkungsmassenanordnung grundsätzlich in einem Schwingungszustand ist bzw. sind.

Die Kurven K₁ und K₂ veranschaulichen ein Ausgestaltungsbeispiel, bei welchem eine vergleichsweise schwere Schwungmassenanordnung mit einer vergleichsweise leichten Auslenkungsmassenanordnung zusammen wirkt.

Wie bereits mit Bezug auf die Fig. 4 erläutert, bilden sich neben der bei idealer Abstimmung auf eine Anregungsordnung im Allgemeinen vorliegenden Resonanzstelle beim X-Wert 1 zwei Nebenresonanzen aus. Bei einem Übergang in eine andere Betriebsart, beispielsweise eine Betriebsart mit geringerer Anzahl an betriebenen Zylindern, beispielsweise halbierter Zylinderanzahl, verschiebt sich die kritische Ordnung, wobei bei Halbierung der Zylinderanzahl dann ein Zustand vorliegt, bei welchem das Verhältnis 0,5 auf der X-Achse kritisch wird. Da dieses jedoch gleichermaßen weit entfernt liegt von den bei den Kurven K₁ und K₂ vorhandenen Nebenresonanzen ist auch hier die Gefahr einer übermäßigen Schwingungserhöhung durch ein nicht mehr korrekt auf eine Ordnung abgestimmtes Schwingungssystem praktisch nicht gegeben. In diesem Zustand kann dann ein anders abgestimmtes Schwingungssystem bzw. ein anderer drehzahladaptiver Tilger wirksam sein, um eine effiziente Dämpfung zu erreichen.

Die Kurven K₃ und K₄ veranschaulichen die Übertragungsfunktionen der Schwungmassenanordnung bzw. der Auslenkungsmassenanordnung für einen Fall, in welchem eine vergleichsweise leichte Schwungmasse mit einer vergleichsweise schweren Auslenkungsmassenanordnung bzw. Tilgermasse kombiniert ist. Bei gleicher Abstimmung auf eine bestimmte anregende Ordnung ist zu erkennen, dass die auch in diesem Fall auftretenden Nebenresonanzen deutlich weiter auseinander liegen, so dass auch in diesem Fall ein Übergang in eine Betriebsart mit anderer, insbesondere geringerer Leistungsfähigkeit, bei welcher die kritische Anregungsordnung beispielsweise nicht mehr die zweite Ordnung, sondern die erste Ordnung ist, gleichermaßen nicht dazu führt, dass eine Nebenresonanz getroffen wird und somit eine übermäßige Schwingungserhöhung stattfinden könnte.

Unter Berücksichtigung dieser in Fig. 11 veranschaulichten Übertragungsfunktionen ist es gemäß einem besonders vorteilhaften Aspekt der Erfindung sinnvoll, dass ein Verhältnis zwischen dem Massenträgheitsmoment einer jeweils wirksamen Auslenkungsmassenanordnung, beispielsweise bereitgestellt durch die Gesamtheit der in Zuordnung zu einer anregenden Ordnung wirksamen Auslenkungsmassen, zum Massenträgheitsmoment der Schwungmassenanordnung, also beispielsweise der Primärseite 16 des in Fig. 5 dargestellten Drehschwingungsdämpfers 12, kleiner als 90%, vorzugsweise kleiner als 50% ist, was den Kurven K₁ bzw. K₂ in Fig. 11 entspricht, oder größer als 110%, vorzugsweise 200% ist, was durch die Kurven K₂ und K₄ in Fig. 11 veranschaulicht ist. Somit wird beim Übergang zwischen Betriebsarten verschiedener Leistungsfähigkeit vermieden, dass der Umstand, dass verschiedene Anregungsordnungen in diesen verschiedenen Betriebsarten verschieden kritisch sind, dazu führen kann, dass durch eine zuvor unkritische, in einer dann neu eingenommenen Betriebsart aber kritisch werdenden Betriebsart eine Nebenresonanz eines drehzahladpativen Tilgers getroffen wird. Alternativ oder zusätzlich kann vorgesehen sein, dass für verschiedene Anregungsordnungen, die in verschiedenen Betriebsarten als unterschiedlich kritisch zu beurteilen sind, jeweils speziell abgestimmte Auslenkungsmassenpendeleinheiten, also drehzahladaptive Tilger, vorgesehen sind.

Es sei in diesem Zusammenhang noch einmal erwähnt, dass eine derartige Abstimmung auf verschiedene Anregungsordnungen dadurch erfolgen kann, dass baulich getrennte Einheiten vorgesehen werden, oder es können mehrere Auslenkungsmassenpendeleinheiten jeweils mit unterschiedlicher Ausgestaltung zusammengefasst sein, um eine Abstimmung auf verschiedene Ordnungen zu finden.

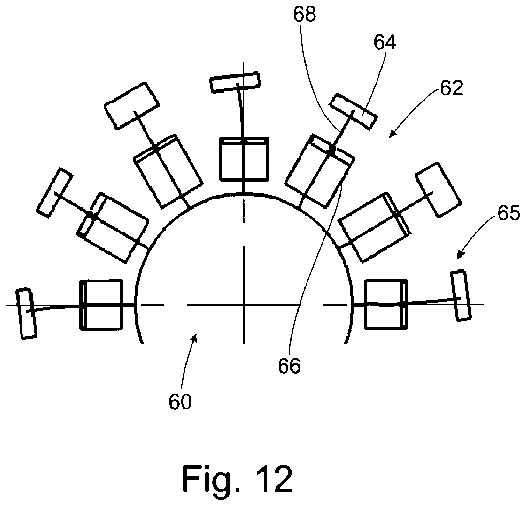

Die Fig. 12 zeigt aufbauend auf dem Konstruktionsprinzip, wie es vorangehend beispielsweise mit Bezug auf die Fig. 8 erläutert wurde, einen Festfrequenztilger 60 mit einer Mehrzahl von Auslenkungsmassenpendeleinheiten 62 jeweils mit einer Auslenkungsmasse 64 und einem an einem Auslenkungsmassenträger 66 abgestützten und die Auslenkungsmasse 64 tragenden Rückstellelement 68. Dieses beispielsweise als Blattfeder ausgebildete Rückstellelement 68 spannt die Auslenkungsmasse 64 in eine Grund-Relativlage bezüglich des Auslenkungsmassenträgers 66 vor, so dass eine Feder-Masse-Pendeleinheit gebildet ist, bei welcher durch die Steifigkeit des Rückstellelements einerseits und die Auswahl der Masse der jeweiligen Auslenkungsmasse 64 andererseits eine Abstimmung auf eine bestimmte anregende Frequenz erreicht werden kann.

Wie die Fig. 12 dies veranschaulicht, können derartige Auslenkungsmassenpendeleinheiten 62 verschieden gestaltet sein, um eine Abstimmung auf verschiedene anregende Frequenzen zu erreichen. Die zueinander jeweils gleich gestalteten Auslenkungsmassenpendeleinheiten 62 bilden mit ihren jeweiligen Auslenkungsmassen 64 eine für eine jeweilige Frequenz wirksame Auslenkungsmassenanordnung 65. Ein derartiger Festfrequenztilger 60 kann zur weitergehenden Dämpfung mit den vorangehend erläuterten Dämpfungsaspekten kombiniert werden, um insbesondere in Drehzahlbereichen, in welchen ein drehzahladaptiver Tilger bedingt durch konstruktive Aspekte nicht ausreichend wirksam sein kann, eine zusätzliche Dämpfung erreichen zu können. Auch könnte ein derartiger Festfrequenztilger 60 bei geeigneter Abstimmung auf verschiedene besonders kritische Frequenzen auch in Zuordnung zu verschiedenen Betriebsarten abgestimmt sein, um dafür zu sorgen, dass jeweils in einer eingestellten Betriebsart besonders kritische zu erwartende Anregungsfrequenzen effizient getilgt werden können. Dies bedeutet, dass auch alleine die Kombination eines Festfrequenztilgers 60, wie er in Fig. 12 veranschaulicht ist, mit einer in ihrer Betriebsart variierbaren Brennkraftmaschine für eine effiziente Tilgung bzw. Dämpfung von Schwingungen auch beim Übergang zwischen verschiedenen Betriebsarten sorgen kann.

## Patentansprüche

1. Antriebssystem für ein Fahrzeug, umfassend eine Brennkraftmaschine (5) und eine Drehschwingungsdämpfungsanordnung (10), wobei die Brennkraftmaschine (5) zwischen Betriebsarten unterschiedlicher Leistungsfähigkeit umschaltbar ist und wobei die Drehschwingungsdämpfungsanordnung eine Schwungmassenanordnung (16) sowie wenigstens eine Auslenkungsmassenpendeleinheit (56; 56a; 62) mit einem Auslenkungsmassenträger (32; 32a; 66) und einer durch eine Auslenkungsmassenkopplungsanordnung (50; 54a) an dem Auslenkungsmassenträger bezüglich diesem aus einer Grund-Relativlage auslenkbar getragenen Auslenkungsmassenanordnung (44; 44a; 65) umfasst, wobei sich bei Änderung der Betriebsart eine hauptanregende Ordnung ändert, und wobei die AuslenkungsmassenPendeleinheit (56; 56a; 62) für jede der hauptanregenden Ordnungen bei Änderung der Betriebsart ausgelegt ist,
wobei:
- wenigstens eine Auslenkungsmassenpendeleinheit (56) als Fliehkraft-Masse-Pendeleinheit ausgebildet ist, wobei bei Auslenkung der Auslenkungsmassenanordnung (44) aus der Grund-Relativlage bezüglich des Auslenkungsmassenträgers (32) ein Radialabstand der Auslenkungsmassenanordnung (44) bezüglich einer Drehachse sich verändert, wobei an dem Auslenkungsmassenträger (32) und der Auslenkungsmassenanordnung (44) wenigstens eine Führungsbahn (46, 48) mit einem Scheitelbereich vorgesehen ist und die Auslenkungsmassenkopplungsanordnung (50) ein entlang der Führungsbahn (46, 48) bewegbares Kopplungsorgan (50) umfasst, wobei bei Auslenkung der Auslenkungsmassenanordnung (44) aus der Grund-Relativlage das Kopplungsorgan (50) sich ausgehend vom Scheitelbereich einer im Auslenkungsmassenträger (32) vorgesehenen Führungsbahn (46) und einer in der Auslenkungsmassenanordnung (44) vorgesehenen Führungsbahn (48) bewegt,
und
- ferner ein Drehschwingungsdämpfer (12) mit einer Primärseite (16) und einer gegen die Wirkung einer Dämpferelementenanordnung (24) bezüglich der Primärseite (16) um eine Drehachse (A) drehbaren Sekundärseite (22) vorgesehen ist, wobei vorzugsweise die Primärseite (16) des Drehschwingungsdämpfers (10) im Wesentlichen die Schwungmassenanordnung (16) bereitstellt und die Sekundärseite (22) des Drehschwingungsdämpfers den Auslenkungsmassenträger (32) bereitstellt.

2. Antriebssystem nach Anspruch 1, **dadurch gekennzeichnet, dass** ein Massenträgheitsmoment der Auslenkungsmassenanordnung (44; 44a; 65) entweder kleiner als 90% eines Massenträgheitsmoments der Schwungmassenanordnung (16) ist oder größer als 110% des Massenträgheitsmoments der Schwungmassenanordnung (16) ist.

3. Antriebssystem nach Anspruch 1 oder 2, **dadurch gekennzeichnet, dass** das Massenträgheitsmoment der Auslenkungsmassenanordnung (44; 44a; 65) entweder kleiner als 75%, vorzugsweise 50%, des Massenträgheitsmoments der Schwungmassenanordnung (16) ist oder größer als 150%, vorzugsweise 200%, des Massenträgheitsmoments der Schwungmassenanordnung (16) ist.

4. Antriebssystem nach einem der Ansprüche 1 bis 3, **dadurch gekennzeichnet, dass** wenigstens zwei Auslenkungsmassenpendeleinheiten (56a, 56a') in Zuordnung zu unterschiedlichen Anregungsordnungen zueinander unterschiedlich gestaltet sind.

5. Antriebssystem nach Anspruch 4, **dadurch gekennzeichnet, dass** in Zuordnung zu wenigstens einer Anregungsordnung wenigstens zwei Auslenkungsmassenpendeleinheiten (56a, 56a') vorgesehen sind.

6. Antriebssystem nach einem der Ansprüche 1 bis 5, **dadurch gekennzeichnet, dass** die Betriebsarten einen ersten Betriebszustand mit Betrieb aller Zylinder und wenigstens einen zweiten Betriebszustand mit Betrieb nur eines Teils der Zylinder umfassen.

7. Antriebssystem nach einem der Ansprüche 1 bis 6, **dadurch gekennzeichnet, dass** die Betriebsarten einen Zweitaktbetrieb und einen Viertaktbetrieb umfassen.

8. Antriebssystem nach einem der Ansprüche 1 bis 7, **dadurch gekennzeichnet, dass** wenigstens eine Auslenkungsmassenpendeleinheit (62) als Feder-Masse-Pendeleinheit ausgebildet ist, wobei die Auslenkungsmassenkopplungsanordnung eine bezüglich des Auslenkungsmassenträgers (66) und der Auslenkungsmassenanordnung (65) abgestützte oder abstützbare Federanordnung (68) umfasst.

9. Antriebssystem nach einem der Ansprüche 1 bis 8, **dadurch gekennzeichnet, dass** wenigstens eine Auslenkungsmassenpendeleinheit (56a) umfasst:
- einen um eine Drehachse (A) drehbaren Auslenkungsmassenträger (32a),
- eine bezüglich des Auslenkungsmassenträgers (32a) in Umfangsrichtung um die Drehachse (A) auslenkbare Auslenkungsmasse (42a),
- ein in einem Trägerabstützbereich bezüglich des Auslenkungsmassenträgers (32a) und in einem Auslenkungsmassenabstützbereich bezüglich der Auslenkungsmasse (42a) abgestütztes oder abstützbares, verformbares Rückstellelement (54a), wobei eine Auslenkung der Auslenkungsmasse aus einer Grund-Relativlage bezüglich des Auslenkungsmassenträgers (32a) in wenigstens einer Richtung eine Verformung des Rückstellelements (54a) bewirkt,
- ein am Auslenkungsmassenträger (32a) radial bewegbar getragenes und den Trägerabstützbereich bereitstellendes Abstützelement (48a), wobei durch Bewegung des Abstützelements (48a) am Auslenkungsmassenträger (32a) ein Abstand zwischen dem Trägerabstützbereich und dem Auslenkungsmassenabstützbereich veränderbar ist und das Element in Richtung zu einer radial inneren Basislage vorgespannt ist und bei Drehung des Auslenkungsmassenträgers (32a) um die Drehachse (A) entgegen der Vorspannung und der Fliehkrafteinwirkung ausgehend von der Basislage nach radial außen verlagerbar ist.

## Claims

1. Drive system for a vehicle, comprising an internal combustion engine (5) and a torsional vibration damping arrangement (10), wherein the internal combustion engine (5) can be switched between operating modes of different performance capability and wherein the torsional vibration damping arrangement comprises a flywheel mass arrangement (16) and at least one deflection mass pendulum unit (56; 56a; 62) having a deflection mass carrier (32; 32a; 66) and having a deflection mass arrangement (44; 44a; 65) which is carried by a deflection mass coupling arrangement (50; 54a) on the deflection mass carrier such that it can be deflected out of a basic relative position with respect to said deflection mass carrier, wherein a main-excitation order changes when the operating mode changes, and wherein the deflection mass pendulum unit (56; 56a; 62) is configured for each of the main-excitation orders when the operating mode changes,
wherein:
- at least one deflection mass pendulum unit (56) is designed as a centrifugal mass pendulum unit, wherein a radial distance of the deflection mass arrangement (44) with respect to an axis of rotation changes when the deflection mass arrangement (44) is deflected out of the basic relative position with respect to the deflection mass carrier (32), wherein at least one guide path (46, 48) with a vertex region is provided on the deflection mass carrier (32) and the deflection mass arrangement (44), and the deflection mass coupling arrangement (50) comprises a coupling member (50) which is movable along the guide path (46, 48), wherein, upon deflection of the deflection mass arrangement (44) out of the basic relative position, the coupling member (50) moves, starting from the vertex region of a guide path (46) provided in the deflection mass carrier (32) and of a guide path (48) provided in the deflection mass arrangement (44),
and
- there is further provided a torsional vibration damper (12) with a primary side (16) and a secondary side (22) which is rotatable about an axis of rotation (A) with respect to the primary side (16) against the action of a damper element arrangement (24), wherein, preferably, the primary side (16) of the torsional vibration damper (12) substantially provides the flywheel mass arrangement (16), and the secondary side (22) of the torsional vibration damper provides the deflection mass carrier (32).

2. Drive system according to Claim 1, **characterized in that** a mass moment of inertia of the deflection mass arrangement (44; 44a; 65) is either less than 90% of a mass moment of inertia of the flywheel mass arrangement (16) or is greater than 110% of the mass moment of inertia of the flywheel mass arrangement (16) .

3. Drive system according to Claim 1 or 2, **characterized in that** the mass moment of inertia of the deflection mass arrangement (44; 44a; 65) is either less than 75%, preferably 50%, of the mass moment of inertia of the flywheel mass arrangement (16) or is greater than 150%, preferably 200%, of the mass moment of inertia of the flywheel mass arrangement (16) .

4. Drive system according to one of Claims 1 to 3, **characterized in that** at least two deflection mass pendulum units (56a, 56a') are designed differently from one another in association with different excitation orders.

5. Drive system according to Claim 4, **characterized in that** at least two deflection mass pendulum units (56a, 56a') are provided in association with at least one excitation order.

6. Drive system according to one of Claims 1 to 5, **characterized in that** the operating modes comprise a first operating state with operation of all the cylinders and at least one second operating state with operation of only some of the cylinders.

7. Drive system according to one of Claims 1 to 6, **characterized in that** the operating modes comprise a two-cycle operation and a four-cycle operation.

8. Drive system according to one of Claims 1 to 7, **characterized in that** at least one deflection mass pendulum unit (62) is designed as a spring-mass pendulum unit, wherein the deflection mass coupling arrangement comprises a spring arrangement (68) which is supported or can be supported with respect to the deflection mass carrier (66) and the deflection mass arrangement (65).

9. Drive system according to one of Claims 1 to 8, **characterized in that** at least one deflection mass pendulum unit (56a) comprises:
- a deflection mass carrier (32a) which can be rotated about an axis of rotation (A),
- a deflection mass (42a) which can be deflected in the circumferential direction about the axis of rotation (A) with respect to the deflection mass carrier (32a),
- a deformable restoring element (54a) which is supported or can be supported in a carrier support region with respect to the deflection mass carrier (32a) and in a deflection mass support region with respect to the deflection mass (42a), wherein a deflection of the deflection mass out of a basic relative position with respect to the deflection mass carrier (32a) in at least one direction causes a deformation of the restoring element (54a),
- a supporting element (48a) which is carried in a radially movable manner on the deflection mass carrier (32a) and provides the carrier support region, wherein a distance between the carrier support region and the deflection mass support region can be changed by movement of the supporting element (48a) on the deflection mass carrier (32a), and the element is preloaded in the direction of a radially inner basic position and, starting from the basic position, is displaceable radially outwards counter to the preloading and the action of centrifugal force upon rotation of the deflection mass carrier (32a) about the axis of rotation (A).

## Revendications

1. Système de propulsion pour un véhicule, comprenant un moteur à combustion interne (5) et un arrangement d'amortissement des vibrations de torsion (10), le moteur à combustion interne (5) pouvant être commuté entre des modes de fonctionnement de différents rendements et l'arrangement d'amortissement des vibrations de torsion comportant un arrangement de masse oscillante (16) ainsi qu'au moins une unité pendulaire de masse de déviation (56 ; 56a ; 62) pourvue d'un porte-masse de déviation (32 ; 32a ; 66) et d'un arrangement de masse de déviation (44 ; 44a ; 65) porté par un arrangement d'accouplement de masse de déviation (50 ; 54a) au porte-masse de déviation de manière à pouvoir être dévié par rapport à celui-ci depuis une position relative au sol, un ordre d'excitation principal étant modifié en cas de modification du mode de fonctionnement, et l'unité pendulaire de masse de déviation (56 ; 56a ; 62) étant conçue pour chacun des ordres d'excitation principaux lors d'une modification du mode de fonctionnement,
- au moins une unité pendulaire de masse de déviation (56) étant réalisée sous la forme d'une unité pendulaire à masse à force centrifuge, un écart radial de l'arrangement de masse de déviation (44) par rapport à un axe de rotation se modifiant lors d'une déviation de l'arrangement de masse de déviation (44) depuis la position relative au sol par rapport au porte-masse de déviation (32), au moins une piste de guidage (46, 48) pourvue d'une zone de sommet étant présente au niveau du porte-masse de déviation (32) et de l'arrangement de masse de déviation (44) et l'arrangement d'accouplement de masse de déviation (50) comportant un organe d'accouplement (50) qui peut se déplacer le long de la piste de guidage (46, 48), l'organe d'accouplement (50), lors d'une déviation de l'arrangement de masse de déviation (44) depuis la position relative au sol, se déplaçant à partir d'une zone de sommet d'une piste de guidage (46) présente dans le porte-masse de déviation (32) et d'une piste de guidage (48) présente dans l'arrangement de masse de déviation (44),
et
- un amortisseur de vibrations de torsion (12), pourvu d'un côté primaire (16) et d'un côté secondaire (22) pouvant tourner autour d'un axe de rotation (A) par rapport au côté primaire (16) en s'opposant à l'effet d'un arrangement d'éléments amortisseurs (24), étant présent, de préférence le côté primaire (16) de l'amortisseur de vibrations de torsion (12) fournissant sensiblement l'arrangement de masse oscillante (16) et le côté secondaire (22) de l'amortisseur de vibrations de torsion fournissant le porte-masse de déviation (32).

2. Système de propulsion selon la revendication 1, **caractérisé en ce qu'**un moment d'inertie des masses de l'arrangement de masse de déviation (44 ; 44a ; 65) est soit inférieur à 90 % d'un moment d'inertie des masses de l'arrangement de masse oscillante (16), soit supérieur à 110 % du moment d'inertie des masses de l'arrangement de masse oscillante (16).

3. Système de propulsion selon la revendication 1 ou 2, **caractérisé en ce que** le moment d'inertie des masses de l'arrangement de masse de déviation (44 ; 44a ; 65) est soit inférieur à 75 %, de préférence à 50 %, du moment d'inertie des masses de l'arrangement de masse oscillante (16), soit supérieur à 150 %, de préférence à 200 %, du moment d'inertie des masses de l'arrangement de masse oscillante (16).

4. Système de propulsion selon l'une des revendications 1 à 3, **caractérisé en ce qu'**au moins deux unités pendulaires de masse de déviation (56a, 56a') sont configurées différemment l'une de l'autre en association à des ordres d'excitation différents.

5. Système de propulsion selon la revendication 4, **caractérisé en ce qu'**au moins deux unités pendulaires de masse de déviation (56a, 56a') sont présentes en association à au moins un ordre d'excitation.

6. Système de propulsion selon l'une des revendications 1 à 5, **caractérisé en ce que** les modes de fonctionnement comprennent un premier état de fonctionnement avec le fonctionnement de tous les cylindres et au moins un deuxième état de fonctionnement avec le fonctionnement d'une partie seulement des cylindres.

7. Système de propulsion selon l'une des revendications 1 à 6, **caractérisé en ce que** les modes de fonctionnement comprennent un fonctionnement en deux temps et un fonctionnement en quatre temps.

8. Système de propulsion selon l'une des revendications 1 à 7, **caractérisé en ce qu'**au moins une unité pendulaire de masse de déviation (62) est réalisée sous la forme d'une unité pendulaire à masse à ressort, l'arrangement d'accouplement de masse de déviation comportant un arrangement de ressort (68) soutenu ou pouvant être soutenu par rapport au porte-masse de déviation (66) et à l'arrangement de masse de déviation (65).

9. Système de propulsion selon l'une des revendications 1 à 8, **caractérisé en ce qu'**au moins une unité pendulaire de masse de déviation (56a) comprend :
- un porte-masse de déviation (32a) pouvant tourner autour d'un axe de rotation (A),
- une masse de déviation (42a) pouvant être déviée dans la direction périphérique autour de l'axe de rotation (A) par rapport au porte-masse de déviation (32a),
- un élément de rappel (54a) déformable, soutenu ou pouvant être soutenu dans une zone de soutien d'élément porteur par rapport au porte-masse de déviation (32a) et dans une zone de soutien de masse de déviation par rapport à la masse de déviation (42a), une déviation de la masse de déviation de puis une position relative au sol par rapport au porte-masse de déviation (32a) dans au moins une direction provoquant une déformation de l'élément de rappel (54a),
- un élément de soutien (48a) porté avec mobilité radiale au niveau du porte-masse de déviation (32a) et fournissant la zone de soutien d'élément porteur, un écart entre la zone de soutien d'élément porteur et la zone de soutien de masse de déviation pouvant être modifié par le mouvement de l'élément de soutien (48a) au niveau du porte-masse de déviation (32a) et l'élément étant précontraint en direction d'une position de base radialement à l'intérieur et, en cas de rotation du porte-masse de déviation (32a) autour de l'axe de rotation (A), pouvant être déplacé radialement vers l'extérieur à partir de la position de base en s'opposant à la précontrainte et à l'effet de la force centrifuge.
